Europäisches Patentamt

European Patent Office

Office européen des brevets

(11) Publication number: **0 092 980**
**A2**

## (12) EUROPEAN PATENT APPLICATION

(21) Application number: **83302272.6**

(22) Date of filing: **21.04.83**

(51) Int. Cl.³: **G 02 B 5/16**
**H 01 B 11/00**

(30) Priority: **22.04.82 GB 8211670**

(43) Date of publication of application:
**02.11.83 Bulletin 83/44**

(84) Designated Contracting States:
**CH DE FR IT LI NL SE**

(71) Applicant: **BICC Public Limited Company**
**21, Bloomsbury Street**
**London, WC1B 3QN(GB)**

(72) Inventor: **Gaylard, Bernard**
**2 Ollerbarrow Road Hale**
**Altrincham Cheshire(GB)**

(74) Representative: **Ross Gower, Edward Lewis et al,**
**BICC plc Patents Department 38 Ariel Way Wood Lane**
**London W12 7DX(GB)**

(54) An improved flexible elongate body.

㉗ A simple, inexpensive and compact overhead conductor incorporating an optical guide has a circumferentially rigid, circumferentially continuous aluminium central core 3 having an elongate compartment 2 within and throughout the length of the core in which is loosely housed an optical fibre 1. A layer 4 of steel wires 5 surrounds the central core 3 and a circumferentially continuous outer layer 6 of aluminium surrounds the steel wires. Aluminium of the central core 3 and/or of the outer layer 6 at least partially fills interstices between the steel wires 5. Use of expensive aluminium-clad steel wires is unnecessary.

EP 0 092 980 A2

Croydon Printing Company Ltd.

## AN IMPROVED FLEXIBLE ELONGATE BODY

This invention relates to flexible elongate bodies of the kind which comprise a plurality of bare elongate elements of metal or metal alloy and which are adapted to be freely supported from spaced supports in long lengths. The invention is especially, but not exclusively, concerned with overhead electric conductors of the kind which comprise one or more than one layer of bare elongate elements of electrically conductive metal or metal alloy but it is to be understood that the invention does not exclude flexible elongate bodies not normally intended to carry electric current, for instance, wire ropes.

In the Complete Specification of our British Patent No. 1598438 there is described and claimed a flexible stranded body which includes at least one optical waveguide for use in the communications field adapted for transmission of light and which comprises at least one layer of helically wound bare elongate elements of metal or metal alloy, at least one elongate compartment within and extending throughout the length of the stranded body and, loosely housed in the elongate compartment or in at least one of the elongate compartments, at least one separate optical fibre and/or at least one optical bundle, as defined in the aforesaid Complete Specification.

One form of flexible stranded body lying within the scope of the aforesaid patent comprises a substantially circumferentially rigid central core of metal or metal alloy having an elongate compartment within and extending throughout the length of the core; at least one optical fibre loosely housed in the elongate compartment; and, surrounding the central core, at least one layer of helically wound bare elongate elements of metal or metal alloy.

For reasons of corrosion protection and strength it has been proposed to employ, as the helically wound bare elongate elements of metal or metal alloy, in flexible stranded bodies such as a flexible stranded body of the kind described in the preceding paragraph, steel wires clad with aluminium or an aluminium-based alloy. Aluminium clad steel wires are difficult to produce and, as a consequence, are expensive and contribute to a substantial extent to the overall cost of a flexible stranded body.

It is an object of the present invention to provide a simple, relatively inexpensive and compact flexible elongate body in which the use of steel wires clad with aluminium or an aluminium-based alloy is eliminated and which is especially suitable for use as an overhead earth conductor.

According to the invention, the improved flexible elongate body comprises a substantially circumferentially rigid and substantially circumferentially continuous central core of aluminium or an aluminium-based alloy having an elongate compartment within and extending throughout the length of the core; at least one optical fibre loosely housed in the elongate compartment; at least one layer of bare elongate elements of steel surrounding the central core; and at least one substantially circumferentially continuous outer layer of aluminium or an aluminium-based alloy surrounding the layer or layers of steel bare elongate elements, aluminium or aluminium-based alloy of the central core and/or of the outer layer at least partially filling interstices between the steel bare elongate elements.

It will be appreciated that since the steel bare elongate elements are sandwiched between the central core of aluminium or an aluminium-based alloy and the circumferentially continuous outer layer of aluminium or an aluminium-based alloy and aluminium or aluminium-based alloy at least partially fills interstices between the steel bare elongate elements, the steel bare elongate elements are not exposed to the atmosphere and, consequently, risk of damage arising from corrosion is substantially reduced.

Preferably, the steel bare elongate elements of the or each layer extend helically around the central core with a long length of lay and, where two or more layers are applied, preferably the direction of lay of adjacent layers are of opposite hand. In some circumstances, the elongate elements of the or each layer may extend substantially parallel to the axis of the elongate body. The steel bare elongate elements are preferably galvanised.

The central core preferably is initially a single extrudate of substantially C-shaped transverse cross-section, one or each of the limbs of the C having been folded inwardly (for instance, by passing the extrudate through an appropriate die or dies prior to application of the layer or layers of bare elongate elements) so that the gap between the free ends of the limbs is closed. Alternatively, the central core may be an extruded tube.

The or each circumferentially continuous outer layer of aluminium or an aluminium-based alloy preferably is initially a single extrudate of substantially C-shaped transverse cross-section, one or each of the limbs of the C having been folded inwardly (for instance, by passing the assembly through an appropriate die or dies) so that the gap between the free ends of the limbs is closed. Alternatively, the or each circumferentially continuous outer layer of aluminium or aluminium-based alloy may be a drawn-down tube.

5

0092980

Any spaces in the interstices between the bare elongate elements not occupied by aluminium or aluminium-based alloy may be substantially filled with water-impermeable grease.

The or each optical fibre loosely housed in the elongate compartment preferably is of a length substantially greater than that of the elongate compartment. The or each optical fibre may be secured to the central core at longitudinally spaced positions along the length of the flexible elongate body, the part of the or each optical fibre extending between any two adjacent positions at which the optical fibre is secured to the central core being loosely housed in, and of a length substantially greater than that of, that part of the elongate compartment extending between said two adjacent positions. The spacing between any two adjacent positions at which the optical fibre is secured to the central core will be such that, when the flexible elongate body is suspended between two towers or other upstanding supports under its own weight, the part of the optical fibre between any two adjacent positions will not be bent or otherwise distorted to such an extent that the optical transmission efficiency of the optical fibre is impaired to an undesirable extent. The or each optical fibre may be secured to the central core at each of said longitudinally spaced positions by any technique that will not have a detrimental effect on the optical transmission efficiency of the optical fibre but, in one preferred embodiment, it is secured to the central core at each position by a local deposit of resin or other material that bonds both to the optical fibre and to the internal surface of the central core. For this purpose, it is preferred to employ a high temperature performance pressure sensitive adhesive of the silicone resin type, such as that sold under the trade name Dow Corning 280A or 282 Adhesive, which may or may not be cured by the addition of a peroxide curing agent.

Those parts of the elongate compartment not occupied by the optical fibre or optical fibres may be substantially filled with water-impermeable medium of a greaselike nature which is of such a consistency that the or each optical fibre is free to move relative to the flexible elongate body when the flexible elongate body vibrates, oscillates or is otherwise flexed. The greasy water-impermeable medium may consist of, of may comprise as a major constituent, petroleum jelly.

Although the or each optical fibre of the improved flexible elongate body is preferably separate and unsupported, in some circumstances it may be a component element of an optical bundle (by which is meant a group of optical fibres or a group of fibres including at least one optical fibre and at least one non-optical reinforcing fibre or other reinforcing elongate member)
or it may be supported by a flexible elongate carrier
member which is loosely housed in the elongate
compartment. The flexible elongate carrier member may
be at least one tape on or within which the or each
optical fibre is secured or it may be a flexible fibrous
rope which is loosely housed in the elongate compartment
and around which the or each optical fibre is helically
wound. In the latter case, the fibrous rope is
preferably made of fine glass fibre or silicon fibre in
bulk form (similar to cotton wool) which will support
the optical fibre or fibres in place and will act as an
excellent shock absorber under vibration conditions. In
a further preferred embodiment, the flexible elongate
carrier member may be a tube of plastics material in
which the or each optical fibre is loosely housed, the
plastics tube itself being loosely housed in the
elongate compartment.

When the improved flexible elongate body is an
overhead electric conductor, in some circumstances an
electric current flowing for a limited period along the
conductor, as may occur as a result of a fault or
lightning, may be of such a value that there is a risk
that heat generated during passage of the current will
be conducted to the optical fibre or optical fibres and
will result in such damage to the or each optical fibre
that its light-transmission efficiency is reduced to an undesirable extent. For example, where an optical fibre is loosely housed in a plastics tube, the generated heat may cause the plastics material to soften and exert such pressure on the optical fibre loosely housed in the tube as to reduce its light-transmission efficiency to an undesirable extent. Accordingly, in some circumstances, a layer of thermally insulating material may be housed in the elongate compartment and surround the optical fibre or optical fibres. Preferably, the thermally insulating layer is a circumferentially continuous layer which is bonded or otherwise adheres to the internal surface of the central ·core. The layer of thermally insulating material may be firmly bonded to substantially the whole of the internal surface area of the central core, or the layer of thermally insulating material may adhere to mutually spaced portions of the internal surface area, any air between the thermally insulating layer and the metal central core serving as additional thermal insulation. The layer of thermally insulating material is preferably a coating of plastics thermally insulating material such as silicone rubber, polytetrafluroethylene and other fluroethylene polymers and co-polymers, polyetheretherketone, polycarbonates, polysulphones, polyesters and Kevlar. For enhanced thermal insulation, these plastics materials may be in cellular form.

The invention is further illustrated by a description, by way of example, of a preferred overhead earth conductor with reference to the accompanying diagrammatic drawing which shows a transverse cross-sectional view of the overhead earth conductor.

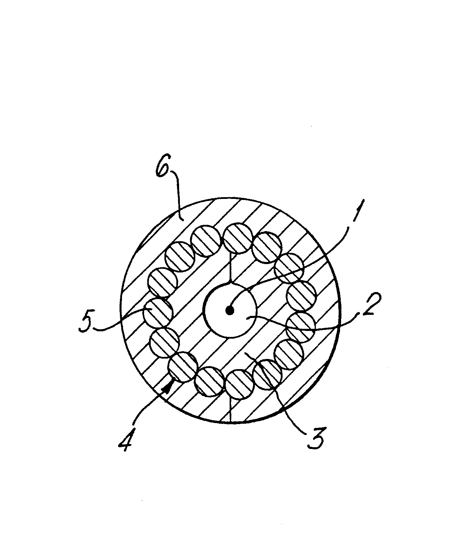

The overhead earth conductor shown in the drawing comprises a central core 3 of aluminium formed from a single extrudate of substantially C-shaped transverse cross-section whose limbs have been folded inwardly (for instance, by passing the extrudate through an appropriate die or dies) so that the gap between the free ends of the limbs is closed and the central core is of substantially circular cross-section. Extending throughout the length of the central core 3 is an elongate compartment 2 in which is loosely housed an optical fibre 1.A layer 4 of galvanised steel wires 5 surrounds the central core 3, the wires being helically laid around the central core with a long length of lay. A circumferentially continuous outer layer 6 of aluminium surrounds the layer 4 of galvanized steel wires 5, the outer layer being formed from a single extrudate of substantially C-shaped transverse cross-section whose limbs have been folded inwardly (for instance by passing the assembly through an appropriate die or dies) so that the gap between the free ends of the limbs is closed. Aluminium of the central core 3 and aluminium of the outer layer 6 partially fills the interstices between the galvanised steel wires 5. Spaces in the interstices between the galvanised steel wires 5 not occupied by aluminium are substantially filled with water-impermeable grease (not shown).

Since the galvanised steel wires 5 are sandwiched between the central core 3 of aluminium and the circumferentially continuous outer layer 6 of aluminium and aluminium partially fills the interstices between the galvanized steel wires, the galvanized steel wires are not exposed to the atmosphere and, consequently, risk of damage to the overhead earth conductor arising from corrosion is substantially reduced.

0092980

1.   A flexible elongate body comprising a substantially
circumferentially rigid and substantially
circumferentially continuous central core (3) of aluminium
or an aluminium-based alloy having an elongate compartment
(2) within and extending throughout the length of the core;
at least one optical fibre (1) loosely housed in the
elongate compartment; at least one layer (4) of bare
elongate elements (5) of steel surrounding the central
core; and at least one substantially circumferentially
continuous outer layer (6) of aluminium or an aluminium-
based alloy surrounding the layer or layers of steel bare
elongate elements, aluminium or aluminium-based alloy of
the central core and/or of the outer layer at least
partially filling interstices between the steel bare
elongate elements.

2.   A flexible elongate body comprising a substantially
circumferentially rigid and substantially
circumferentially continuous central core (3) of aluminium
or an aluminium-based alloy having an elongate compartment
(2) within and extending throughout the length of the core;
at least one optical fibre (1) loosely housed in the
elongate compartment; at least one layer (4) of bare
elongate elements (5) of steel surrounding the central
core; and at least one substantially circumferentially
continuous outer layer (6) of aluminium or an aluminium-
based alloy surrounding the layer or layers of steel bare elongate elements, the or each circumferentially continuous outer layer being formed from a single extrudate of substantially C-shaped transverse cross-section, one or each of the limbs of the C having been folded inwardly so that the gap between the free ends of the limbs is closed, aluminium or aluminium-based alloy of the central core and/or of the outer layer or innermost outer layer at least partially filling interstices between the steel bare elongate elements.

3. A flexible elongate body as claimed in Claim 1, wherein the or each substantially circumferentially continuous outer layer (6) is a drawn-down tube.

4. A flexible elongate body as claimed in any one of the preceding Claims, wherein the substantially circumferentially rigid and substantially circumferentially continuous central core (3) is formed from a single extrudate of substantially C-shaped transverse cross-section, one or each of the limbs of the C having been folded inwardly so that the gap between the free ends of the limbs is closed.

5. A flexible elongate body as claimed in any one of Claims 1 to 3, wherein the substantially circumferentially rigid and substantially circumferentially continuous central core (3) is a tube.

6.    A flexible elongate body as claimed in any one of the preceding Claims, wherein the steel bare elongate elements (5) of the or each layer (4) extend helically around the central core (3) with a long length of lay.

7.    A flexible elongate body as claimed in any one of the preceding Claims, wherein the or each optical fibre (1) loosely housed in the elongate compartment (2) is of a length substantially greater than that of the elongate compartment.

8.    A flexible elongate body as claimed in any one of the preceding Claims, wherein the or each optical fibre (1) is a component element of an optical bundle.

9.    A flexible elongate body as claimed in any one of Claims 1 to 7, wherein the or each optical fibre (1) is supported by a flexible elongate carrier member which is loosely housed in the elongate compartment (2).

10.   A flexible elongate body as claimed in any one of the preceding Claims, wherein the flexible elongate body is an overhead electric conductor.